# EUROPÄISCHE PATENTSCHRIFT

(11) **EP 2 801 557 B1**
(45) Veröffentlichungstag und Bekanntmachung des Hinweises auf die Patenterteilung: **16.09.2015**
(21) Anmeldenummer: 13002496.1
(22) Anmeldetag: 11.05.2013
(51) Int. Cl.: C04B 7/345

(54) **Verfahren zur Herstellung eines Magnesiumsilikat-Belit-Calciumaluminatzements**
Method for producing a magnesium silicate belite calcium aluminate cement
Procédé de fabrication d'un ciment de silicate de magnésium-bélite-aluminate de calcium

(43) Veröffentlichungstag der Anmeldung: 12.11.2014
(73) Patentinhaber: HeidelbergCement AG, 69120 Heidelberg (DE)
(72) Erfinder: Bullerjahn, Frank, 69181 Leimen (DE); Spencer, Nicolas, 69254 Malsch (DE); Ben Haha, Mohsen, 69117 Heidelberg (DE); Itul, Anca, 69115 Heidelberg (DE); Schmitt, Dirk, 69181 Leimen (DE)
(74) Vertreter: Wagner, Jutta

(56) Entgegenhaltungen:
- EP-A1- 1 719 741
- EP-A1- 2 243 754
- WO-A2-2007/017142

## Beschreibung

Die vorliegende Erfindung betrifft ein Verfahren zur Herstellung eines Bindemittels für Baustoffe wie Beton, Mörtel oder Putz und ein gemäß diesem Verfahren hergestelltes Bindemittel sowie dessen Verwendung.

Zement als hydraulisches Bindemittel ist ein wichtiges industrielles Erzeugnis, das zu wesentlichen Anteilen aus Portlandzementklinker besteht. Dieser Klinker wird durch Sinterung eines Gemisches aus Kalk, Sand, Ton und Korrekturstoffen bei etwa 1450 °C hergestellt. Nach der Hochtemperaturreaktion liegen die folgenden fremdoxidhaltigen Phasen vor: Alit (Ca₃SiO₅, wird auch als C₃S bezeichnet), Belit (Ca₂SiO₄, wird auch als C2S bezeichnet), Aluminat (Ca₃Al₂O₆, wird auch als C₃A bezeichnet) und Ferrit (Ca₂(AlₓFe₁₋ₓ)₂O₅, wird auch als C₄AF bezeichnet). Dabei tritt Belit hauptsächlich in der Form des β-Polymorphs auf. Diese Phase gilt als relativ träge mit einem geringen Beitrag zur Festigkeit im frühen Alter.

Die hydraulische Reaktivität beschreibt die Reaktion eines Bindemittels mit Wasser unter Bildung eines festen Materials. Im Gegensatz zu derjenigen von Alit erfolgt die Belit-Hydratation langsam über mehrere Monate und Jahre.

Es ist bekannt, dass die Reaktivität von Belit mit Wasser durch mechanochemische Aktivierung (DD 138197 A1), eine schnelle Kühlung nach dem Brennprozess (DD 138197 A1 und DE 3414196 A1) sowie den Einbau von Fremdoxiden (US 5509962 A und DE 3414196 A1) verbessert werden kann. Außerdem sind neben der β-Variante des Belits andere Polymorphe bekannt, die eine bessere (α, α'H, α'L und x) oder schlechtere Reaktivität aufweisen (γ).

Aus H. Ishida, S. Yamazaki, K. Sasaki, Y. Okada, T. Mitsuda, [alpha]-Dicalcium Silicate Hydrate: Preparation, Decomposed Phase, and Its Hydration, J. Am. Ceram. Soc. 76, S. 1707-1712, 1993 ist ein Verfahren zur Herstellung von α-Dicalcium-Silikat-Hydrat (α-C₂SH) bei 200 °C durch eine zweistündige hydrothermale Behandlung von gebranntem Kalk (CaO) und Kieselsäure für Laborsynthesen (Reinheitsgrad p.a.) bekannt. Im Temperaturbereich von 390-490 °C wandelt sich α-C₂SH in verschiedene C₂S-Modifikationen um, die bei weiterer Erhitzung auf 920-960 °C in die α'L-Phase übergehen und beim Abkühlen β-C₂S bilden. Nachteilig hieran ist der hohe Anteil an reaktionsträgem γ-C₂S.

In DE 10 2009 018 632 ist ein Verfahren zur Herstellung eines belithaltigen Bindemittels offenbart, in dem ein Zwischenprodukt, das bei 120 -250 °C durch hydrothermales Behandeln des Ausgangsmaterials mit einem molaren Verhältnis Ca/(Si+Al) zwischen 1,5 und 2,5 hergestellt wurde, einer Reaktionsmahlung bei 100-200°C zwischen 5 min und 30 min unterzogen wird. Nachteilig ist, dass das Reaktionsmahlen ein energetisch ineffizienter Schritt ist. Weiterhin kann nur bei Zugabe von Fließmitteln eine ausreichende Druckfestigkeit nach der Erhärtung erreicht werden.

DE 10 2005 037 771 offenbart ein Verfahren zur Herstellung von Belit-Zement, in dem α-Dicalcium-Silikat-Hydrat (α-C₂SH) bei 100-300 °C durch eine hydrothermale Behandlung des Ausgangsmaterials, das CaO und SiO₂ im molaren Ca/Si-Verhältnis 1,5-2,5 enthält, entsteht. Im Temperaturbereich zwischen 500 und 1000 °C wird α-C₂SH in hydraulisch reaktive C₂S-Modifikationen (Belit-Zement) umgewandelt. Nachteilig hieran ist, dass der Brennprozess bei vergleichsweise hoher Temperatur (über 500 °C) durchgeführt werden muss. Diese hohen Temperaturen führen weiterhin zur Senkung der Reaktivität des Bindemittels.

Jiang et al., "Hydrothermal Processing of New Fly Ash Cement", Ceramic Bulletin, 71, 1992, pages 642 to 647 beschreiben eine Umsetzung von Flugasche und CaO zu C₂S und C₁₂A₇ durch hydrothermale Behandlung (4h bei 200 °C) und Kalzinieren bei 500 bis 900 °C. Die hohe Temperatur beim Kalzinieren wirkt sich negativ auf die Reaktivität des Produkts aus. Zudem ist eine zehnstündige Vorbehandlung bei 80 °C notwendig.

Die nicht vorveröffentlichte EP 12004620.6 beschreibt ein Verfahren zur Herstellung eines Bindemittels, umfassend die Schritte:
a) Bereitstellen eines Ausgangsmaterials, das ein molares Ca/Si-Verhältnis von 1,5 bis 2,5 aufweist, bei dessen Ermittlung diejenigen Bestandteile unberücksichtigt bleiben, die sich bei einer hydrothermalen Behandlung im Autoklaven inert verhalten, aus Rohstoffen
b) Mischen der Rohstoffe,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis 0,1 bis 100 beträgt,
d) Tempern des in Schritt c) erhaltenen Zwischenprodukts bei 350 bis 495 °C, mit einer Aufheizrate von 10-6000 °C/min und einer Verweilzeit von0,01-600 min,
wobei während des Mischens und/oder in den folgenden Schritten 0,1 bis 30 Gew.-% zusätzliche Elemente und/oder Oxide zugegeben werden.

Pimraksa et al., "Synthesis of belite cement from lignite fly ash", Ceram. Int. 35 (2009) 2415-2425 weisen nach, dass Flugasche als Edukt zur Herstellung von Belitzement durch hydrothermale Behandlung und Kalzinieren geeignet ist. Die hydrothermale Behandlung findet bei 130 °C bevorzugt in Anwesenheit von NaOH zur Schaffung alkalischer Bedingungen statt. Die Produkte der hydrothermalen Behandlung werden dann bei 750 bis 950 °C 30 Minuten kalziniert, wobei die Aufheizrate 8 °C/min bis 600 °C und darüber 4 °C/min. beträgt. Als Produkt werden C₂S (β und α) und C₁₂A₇ genannt.

Die meisten dieser Vorschläge gehen von hochwertigen Rohstoffen aus. Außerdem ist überwiegend ein Kalzinieren bei immer noch sehr hohen Temperaturen und/oder eine Aktivierung der Rohstoffe/Zwischenprodukte durch ein energieintensives Reaktionsmahlen nötig.

Es bestand daher die Aufgabe, ein Verfahren zur Herstellung von Bindemitteln vorzuschlagen, durch das eine hohe Reaktivität des Bindemittels erzielt werden kann, um dadurch leistungsfähige Zemente herzustellen. Dabei sollte auch eine deutlich geringere Kohlendioxidemission als bei konventionellen Portlandzementen mit hohem Alitanteil erreicht werden. Außerdem ist eine Schonung hochwertiger, natürlicher Rohstoffe angestrebt, d.h. diese sollen zumindest teilweise, bevorzugt weitgehend bis ganz durch Sekundärrohstoffe ersetzbar sein.

Überraschend wurde nun gefunden, dass Rohstoffe, welche neben Ca und Si auch Mg und Al sowie ggfs. Fe enthalten, durch hydrothermales Behandeln und anschließendes Tempern bei 350 bis maximal 600 °C, idealerweise bei unter 500 °C, sehr reaktive Bindemittel ergeben.

Daher wird die Aufgabe durch ein Verfahren zur Herstellung eines Bindemittels gelöst, umfassend die Schritte:
a) Bereitstellen eines Ausgangsmaterials aus Rohstoffen, welche CaO, MgO, SiO₂, Al₂O₃ und Fe₂O₃ oder andere Verbindungen dieser Elemente enthalten und ein molares (Ca+Mg)/(Si+Al+Fe)-Verhältnis von 1 bis 3.5, ein molares Verhältnis Ca:Mg von 0,1 bis 100 und ein molares Verhältnis (Al+Fe)/Si von 100 bis 0,1 aufweisen, wobei bei der Ermittlung der Verhältnisse diejenigen Bestandteile unberücksichtigt bleiben, die sich bei der hydrothermalen Behandlung im Autoklaven inert verhalten,
b) Mischen der Rohstoffe,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis von 0,1 bis 100 beträgt,
d) Tempern des in Schritt c) erhaltenen Zwischenprodukts bei 350 bis 600 °C, wobei die Aufheizrate von 10 - 6000 °C/min und die Verweilzeit von 0,01 - 600 min betragen.
Vorzugsweise können während des Mischens b) und/oder in den folgenden Schritten 0,1 bis 30 Gew.-% zusätzliche Elemente und/oder Oxide zugegeben werden.

Gemäß dem erfindungsgemäßen Verfahren soll das molare Verhältnis der Summe von Calcium und Magnesium zur Summe von Silizium, Aluminium und Eisen von 1,0 bis 3,5, vorzugsweise von 1,5 bis 2,5, besonders bevorzugt etwa 2, betragen. Das Verhältnis von Calcium zu Magnesium beträgt von 0,1 bis 100, vorzugsweise von 0,2 bis 20 vorzugsweise von 0,5 bis 5. Das Verhältnis der Summe von Aluminium und Eisen zu Silizium beträgt von 0,01 bis 100. Für einen hohen Aluminiumgehalt ist ein Verhältnis der Summe von Aluminium und Eisen zu Silizium von 100 bis 10 bevorzugt, für einen mittleren Aluminiumgehalt von 1 bis 20 und für einen niedrigen Aluminiumgehalt von 0,01 bis 2. Bei der Ermittlung dieser Verhältnisse werden diejenigen Verbindungen nicht berücksichtigt, die sich bei dem Herstellungsverfahren inert verhalten.

Als Ausgangsmaterial können Primär- und/oder Sekundärrohstoffe eingesetzt werden. In einer bevorzugten Ausgestaltung werden Quarze, Sande oder Kiese, Altbeton und Flugasche als Rohstoffe für das Ausgangsmaterial verwendet. Das gewünschte (Ca+Mg)/(Si+Al+Fe)-, Ca/Mg- bzw. Al/Si-Verhältnis kann je nach Rohstoff bereits vorliegen, wenn nicht, müssen die Materialien vor der weiteren Behandlung bezüglich der chemischen Zusammensetzung durch Zugabe weiterer Reaktionspartner Wie Ca-, Mg-, Al-, Fe- oder Si- haltiger Feststoffe zur Einstellung des erforderlichen (Ca+Mg):(Si+Al+Fe)-Verhältnisses von 1 bis 3.5, des gewünschten Ca:Mg-Verhätlnisses von 0,1 bis 100 bzw. des gewünschten Al+Fe:Si-Verhältnisses von 100 bis 0,1 eingestellt werden. Zur Erhöhung des Ca-Anteils eignen sich beispielweise, aber nicht ausschließlich, Portlandit Ca(OH)₂ oder gebrannter Kalk, Aschen mit hohem chemischem CaO- und/oder Freikalkgehalt, Zementklinker sowie Hüttensand. Zur Erhöhung des Mg-Anteils eignet sich z.B. gebrannter Dolomit (gebrannt >500°C). Zur Erhöhung des Al-Anteils sind aluminiumreiche Flugaschen aber auch Tone, beispielsweise calcinierte Tone, Bauxit, Al-haltige Abfallmaterialien und Rückstände gut geeignet.

In der Regel werden die Rohstoffe bezüglich Korngröße und Korngrößenverteilung optimiert. Dazu eignen sich mechanische oder thermische Behandlungen, wobei die thermische Behandlung auch zu einer Verbesserung/Optimierung der (chemischen) mineralogischen Zusammensetzung führen kann. Beispiele dafür sind die Verbrennung von Kohlenstoff (z.B. aus Aschen) oder der Umsetzung von unreaktiven Phasen in reaktivere Verbindungen, wie zum Beispiel SiO₂ oder C₂AS in C₂S, was wiederum zu einer verbesserten Umsetzung während des Autoklavierens führen kann.

In einer bevorzugten Ausgestaltung wird ein Ausgangsmaterial gewählt bzw. durch Vorbehandlung erzeugt, dessen Größtkorn höchstens 0,1 mm beträgt. Hierfür kommen insbesondere die feineren Kornfraktionen aus der Wiederaufbereitung von zementhaltigen Bindemitteln in Baustoffen wie Altbetonen und -zementen zum Einsatz. Ein feineres Ausgangsmaterial ist sowohl im Hinblick auf die Umsetzungsgeschwindigkeit vorteilhaft, als auch hinsichtlich des Aufwandes für die Mahlung des fertigen Zementes. Bei entsprechend feinem Ausgangsmaterial kann eine Mahlung nach der hydrothermalen Behandlung und Temperung entbehrlich sein. Ein Mahlung des erhaltenen Zementes ist in den meisten Fällen nicht notwendig bzw. beschränkt sich auf das Erreichen üblicher Zementfeinheiten. Eine "aktivierende" Intensivvermahlung ist nicht notwendig und findet vorzugsweise nicht statt.

Während des Mischens der Rohstoffe b) oder der anschließenden Prozessschritte erfolgt vorzugsweise eine Zugabe von zusätzlichen Elementen oder Oxiden in einer Menge von 0,1 bis 30 Gew.-%. Natrium, Kalium, Bor, Schwefel, Phosphor oder deren Kombination sind als diese zusätzlichen Elemente/Oxide, die auch zusammenfassend als Fremdoxide bezeichnet werden, bevorzugt. Hierfür eignen sich Alkali- und/oder Erdalkali-Salze und/oder Hydroxide, beispielweise, aber nicht ausschließlich, CaSO₄·2H₂O, CaSO₄·½H₂O, CaSO₄, CaHPO₂·2H₂O, Ca₃P₂O₈, NaOH, KOH, Na₂CO₃, NaHCO₃, K₂CO₃, MgCO₃, MgSO₄, Na₂Al₂O₄, Na₃PO₄, K₃PO₄, Na₂[B₄O₅(OH)₄]·8H₂O, CaCl₂, Ca(NO₃)₂, MgCl₂, Mg(NO₃)₂, AlCl₃, Al(NO₃)₃, FeCl₃, Fe(NO₃)₃Ca(CH₃COO)₂, Mg(CH₃COO)₂, Al(CH₃COO)₃, Ca(HCOO)₂, Mg(HCOO)₂, Al(HCOO)₃, und Mischungen von zwei, drei oder noch mehr davon. In einer bevorzugten Ausführungsform weist die Ausgangsmaterialmischung ein molares Verhältnis P/Si von etwa 0,05 und/oder S/Si von etwa 0,05 und/oder Ca/K von etwa 0,05 auf.

Die, optional wie beschrieben vorbehandelte, Rohstoffmischung kann gegebenenfalls mit Kristallisationskeimen, die beispielsweise Calciumsilikathydrate, Portlandklinker, Hüttensand, Magnesiumsilikate, Calciumsulfat-aluminat(belit)zement, Wasserglas, Glaspulver etc. enthalten, versetzt, also geimpft werden. Die Reaktion kann hierbei durch Impfen mit von 0,01 - 30 Gew.-% Kristallisationskeimen, insbesondere verschiedener Calciumsilikat- und Calciumsilikathydrat enthaltender Verbindungen, insbesondere mit α-2CaO·SiO₂·H₂O, Afwillit, Calciochondrodit, α- und β-Ca₂SiO₄ und anderen Verbindungen, beschleunigt werden.

Die hergestellte Mischung der Rohstoffe, die ggf. wie oben beschrieben geimpft ist, wird anschließend in Schritt c) einer hydrothermalen Behandlung im Autoklaven bei einer Temperatur von 100 bis 300 °C, bevorzugt von 150 °C bis 250 °C unterzogen. Hierbei wird bevorzugt ein Wasser/Feststoff-Verhältnis von 0,1 bis 100, bevorzugt von 2 bis 20 gewählt. Die Verweilzeiten betragen vorzugsweise von 0,1 bis 24 Stunden, bevorzugt von 1 bis 16 Stunden.

Die Mischung der Rohstoffe kann in einem vorgeschalteten zusätzlichen Schritt gebrannt werden. Dieser Schritt ist besonders bevorzugt bei der Verwendung von industriellen Nebenprodukten oder relativ wenig reaktiven bzw. groben Materialien als Rohstoffe. Dabei sind Temperaturen von 350 bis 1400 °C, vorzugsweise von 750 bis 1100 °C, geeignet. Die Brenndauer beträgt 0,1 - 6 Stunden, bevorzugt etwa 1 Stunde. Durch das Brennen der Rohstoffe können Stoffe gezielt nutzbar gemacht werden, welche ansonsten kaum / nicht verwendet werden können (z.B. kristalline Aschen, Kalkstein, Dolomit und Schlacken usw.). Dabei kann das Rohmehl vor dem Klinkerbrand bezüglich seiner chemischen Zusammensetzung optimiert werden und es wird eine verbesserte/größere Umsetzbarkeit im Autoklaven gewährleistet. Des Weiteren bietet sich der Vorteil, dass gezielt reaktive Phasen (z.B. Calcium- und/oder Magnesiumaluminate, Calcium- und/oder Magnesiumsilikate, Calcium- und/oder Magnesiumferrite und - oxide) erzeugt werden können, welche Produkte nach Schritt c) und d) mit besonders hohen Gehalten an x-C₂S, α-C₂S, C₁₂A₇, Mg-silikaten, MgO und/oder mindestens einer reaktiven, röntgenamorphen Phase und/oder wenig kristallinen Phase aufweisen. Ein Vorteil der Verwendung von Belit als Rohmaterial für den Autoklavprozess ist eine verbesserte Phasenzusammensetzung des finalen Bindemittels gegenüber ungebrannten Rohstoffen.

Als mindestens eine Rohstoffkomponente für den vorgeschalteten Klinkerbrand oder bevorzugt direkt für den Autoklavierungsschritt, kann Ofen- oder Heißmehl verwendet werden. Der Vorteil besteht darin, dass dieses Material zu großen Teilen schon entsäuert vorliegt und infolgedessen Energie aber auch zusätzliche Ausrüstung eingespart werden kann. Zusätzlich dazu ermöglicht dies eine "Werk im Werk-Lösung", da Abwärmeströme bzw. -mengen gezielt für den Autoklavierungs- und Temperungsprozess genutzt werden können.

Die durch Mischen und ggfs. Brennen der Rohstoffe erzeugte Ausgangsmaterialmischung wird entsprechend Schritt c) in das mindestens ein Calciumsilikathydrat oder Calciumaluminathydrat oder Calciumaluminiumsilikathydrat oder Magnesiumsilikathydrat oder Calciummagnesiumsilikathydrat oder Magnesium

(Aluminium, Eisen)silikathydrat oder Magnesium (Calcium, Aluminium, Eisen)silikat und ggf. weitere Verbindungen enthaltende Zwischenprodukt durch hydrothermale Behandlung umgewandelt. Dies erfolgt in einem Autoklaven, bei einer Temperatur von 100 bis 300 °C und einer Verweilzeit von 0,1 bis 24 h, wobei das Wasser/Feststoff-Verhältnis von 0,1 bis 100 beträgt.

Das in Schritt c) erhaltene Zwischenprodukt enthält zumindest ein, normalerweise mehrere, der genannten Calcium- und/oder Magnesiumsilikat- bzw. aluminathydrate, typischerweise:
- 0,01 bis 80 Gew.-% α-C₂SH, verschiedene C-S-H Formen einschließlich Dellait und teilweise karbonatisierte C-S-H Phasen sowie amorphe und wenig kristalline Phasen davon
- 0,01 bis 80 Gew.-% Katoit, Si-Katoit, Fe-Katoit, auch als Mono- und Hemikarbonate sowie als amorphe und wenig kristalline Phasen
- 0,01 bis 80 Gew.-% Magnesium(Calcium, Aluminium, Eisen)silikate,
- silikathydrate sowie amorphe und wenig kristalline Phasen davon
- 0,01 bis 80 Gew.-% Aluminium- und/oder Eisensilikate und -silikathydrate sowie amorphe und wenig kristalline Phasen davon
- Spuren- und Nebenbestandteile wie Aluminium- / Eisenoxide und -hydroxide, C₂AS, CH, MgCO₃, Mg(OH)₂, Quarz und Calcit.

Bei den amorphen und wenig kristallinen Phasen handelt es sich im allgemeinen um eine Vorstufe zu den kristallinen Phasen, wie zum Beispiel Calciumsilikate (Belit), Calciumaluminate (Monocalciumaluminate, Mayenit), Magnesium(Aluminium, Eisen)silikate (Serpentintite, Talk), usw., die keine oder nur eine geringe atomare (Nah)Ordnung aufweisen. Das spiegelt sich in der fehlenden Ausbildung von Röntgenreflexen bzw. der Ausbildung sehr stark verbreiteter Reflexe geringerer Intensitäten wieder. Ein gutes Beispiel hierfür stellt ein Hüttensand mit hohem amorphem Anteil (>95 %) dar. Typisch sind ein sehr ausgeprägter sogenannter "Glasbuckel" über einem 2Thethabereich an dem, je nach chem. Zusammensetzung, die Hauptpeak(s) der kristalline Phasen, zum Beispiel Akermannit oder Gehlenit, liegen. Der Grad der Kristallisation hängt von diversen Parametern, wie zum Beispiel der der Art des Ausgangsmaterials, der Temperatur, dem Druck und dem Einbau von Fremdionen ab.

Im folgenden Schritt d) wird das Zwischenprodukt bei einer Temperatur von 350 °C bis 600°C getempert. Hierbei betragen die Aufheizrate von 10 - 6000 °C/min, bevorzugt von 20 - 100 °C/min und besonders bevorzugt etwa 40 °C/min, und die Verweilzeit von 0,01 - 600 min, bevorzugt von 1 - 120 min und besonders bevorzugt von 5 - 60 min. Zur Senkung des Anteils an reaktionsträgerem γ-C₂S bewährt sich eine zusätzliche Haltezeit während des Aufheizens bei 400 - 440 °C von 1 - 120 min, bevorzugt von 10 - 60 min. Es findet kein Reaktionsmahlen statt. Die Temperatur beträgt vorzugsweise 400 bis 550 °C, insbesondere 400 bis 495 °C. Je höher die Temperatur beim Brennen, desto geringer ist vorzugsweise die Zeitdauer des Brennens. Brenntemperaturen unter 500 °C führen zu besonders reaktivem Material, höhere Brenntemperaturen sind jedoch möglich und können je nach Ausgangsmaterial sinnvoll sein. Die Brenntemperatur und -dauer sollte so hoch gewählt werden, dass möglichst alles Ausgangsmaterial umgesetzt wird. Andererseits sollte die Temperatur so niedrig wie möglich sein, da die Reaktivität des Produkts höher ist und dies außerdem die erforderliche Energie und damit Kosten sowie Umweltbeeinträchtigung begrenzt.

Nach dem Abkühlen erhält man ein Produkt, welches mindestens ein Calciumsilikat C₂S, mindestens ein Calciumaluminat und mindestens eine röntgenamorphe Phase umfasst. In der Regel enthält das Produkt die folgenden Komponenten:
- 1 - 95 Gew.-% reaktive Calciumaluminate, vorzugsweise in Form von kristallinem C₁₂A₇, oder von wenig kristallinen oder amorphen Aluminatphasen
- 1 - 80 Gew.-% Magnesium(Calcium, Aluminium, Eisen)silikate, als kristalline, wenig kristalline oder amorphe Phasen, die Fremdionen wie Fe, Al, Ca enthalten können
- 1 - 80 Gew.-% C₂S Polymorphe, als kristalline, wenig kristalline oder amorphe Phasen
- 1 - 80 Gew.-% Calciumaluminatsilkate, als kristalline, wenig kristalline oder amorphe Phasen
- 1 - 80 Gew.-% Calciummagnesiumaluminatsilkate, als kristalline, wenig kristalline oder amorphe Phasen
- bis zu 30 Gew.-% Spuren- und Nebenbestandteile, insbesondere C₅A₃, CA, Calciumoxid, γ-Aluminiumoxid und andere Aluminiumoxide, Quarz und/oder Kalkstein, CaO, Calciumsulfat, MgCO₃, Mg(OH)₂, Fe₃O₄, Eisensilikate wie Fe₂SiO₄, amorphe Eisen-haltige Phasen und
- 0 - 30 Gew.-% Hydrate aus der hydrothermalen Behandlung,
wobei sich alle Anteile des Produkts auf 100 % summieren und die Summe von Calciumsilikaten, Calciumaluminaten, Calciumaluminiumsilikaten, Magnesiumsilikaten und Calciummagnesiumsilikaten mindestens 30 Gew.-%, vorzugsweise mindestens 50 Gew.-%, am meisten bevorzugt mindestens 70 Gew.-% beträgt.

Sofern die Feinheit des Produkts bereits ausreicht (Einsatz feiner Rohstoffe mit geeigneter Kornverteilung), ist das Produkt bereits das gewünschte, hydraulisch reaktive Bindemittel bzw. eine Komponente davon. Reicht die Feinheit nicht oder wird ein Bindemittel mit besonders hoher Feinheit gewünscht, kann das Produkt in an sich bekannter Weise, mit oder ohne Zusätze, auf eine gewünschte Feinheit bzw. Kornverteilung vermahlen werden. Geeignete Feinheiten sind beispielsweise 2000 bis 10.000 cm²/g (nach Blaine).

Das Bindemittel kann neben dem erfindungsgemäßen Produkt zusätzlich einen oder mehrere weitere Bestandteile ausgewählt unter Portlandzement, Flugasche, Metakaolin, Hüttensand und Kalkstein enthalten. Diese Bestandteile können in der gewünschten Feinheit zugefügt oder gemeinsam mit dem erfindungsgemäßen Produkt vermahlen werden.

Die BET-Oberfläche des Bindemittels soll von 1 bis 30 m²/g betragen. Der Wassergehalt im Bindemittel beträgt in der Regel maximal 20 Gew.-%, vorzugsweise weniger als 15 Gew.-% und insbesondere weniger als 10 Gew.-%.

Durch das erfindungsgemäße Verfahren können hydraulisch hochreaktive Bindemittel auf Basis von C₂S, C₁₂A₇, Magnesiumsilikaten und amorphen Phasen hergestellt werden. Diese zeichnen sich dadurch aus, dass sehr reaktive Polymorphe von C₂S, hoch reaktive(n) Magnesium(Calcium, Aluminium, Eisen)silikaten, C₁₂A₇ und röntgenamorphe sowie wenig kristalline Phasen enthalten sind.

Weiterhin kann das Bindemittel auch γ-Ca₂SiO₄ enthalten. Die Bildung dieses Polymorphs wird bei der Portlandzementherstellung durch eine schnelle Klinkerkühlung vermieden, da dieser Polymorph nach bisheriger Ansicht keinen Beitrag zur Festigkeitsentwicklung leistet. Überraschend wurde gefunden, dass diese Phase, hergestellt durch das erfindungsgemäße Verfahren bei einer Temperatur < 500 °C, im Unterschied zu den bisherigen Herstellungsverfahren eine gute Reaktivität zeigt.

Im Unterschied zu DE 10 2009 018 632, DE 10 2007 035 257, DE 10 2007 035 258 und DE 10 2007 035 259 erfolgt kein Reaktionsmahlen, da dieser Schritt energieintensiv ist und derart hergestellte Produkte eine geringere Reaktivität aufweisen, als die mit dem hier beschriebenen Verfahren aus anders zusammengesetzten Rohstoffen hergestellten Produkte.

Im Gegensatz zu bisherigen Vorschlägen mit einer Verwendung von aluminiumhaltigen Rohstoffen wird die Temperatur beim Tempern auf unter 600 °C, vorzugsweise unter 550 °C und insbesondere unter 500 °C begrenzt, so dass sehr reaktive Polymorphe von Mg-haltigen, C₂S, und anderen Phasen und eine röntgenamorphe Phase erhalten werden. Dadurch ergibt sich eine sehr hohe Reaktivität und eine besonders schnelle Hydratation und Festigkeitsentwicklung, basierend auf den gebildeten Calcium- und Magnesiumsilikathydraten.

Die Erfindung soll anhand der folgenden Beispiele erläutert werden, ohne jedoch auf die speziell beschriebenen Ausführungsformen beschränkt zu sein. Soweit nichts anderes angegeben ist oder es sich aus dem Zusammenhang nicht zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Aus den in Tabelle 1 aufgelisteten Rohstoffen wurden Ausgangsmaterialmischungen hergestellt, eine mit 37,8 % Portlandit, 29 % Brucit und 32,6 % Silikastaub sowie zum Vergleich eine zweite mit 63,7 % CaO und 36,3 % Silikastaub.

**Tabelle 1**

| Rohstoff | Portlandit | CaO | Brucit | Silikastaub |
|---|---|---|---|---|
| Glühverlust 1050°C | 24,33 | | 31,04 | 2,73 % |
| SiO₂ | | | | 94,05 % |
| Al₂O₃ | | | | 0,61 % |
| TiO₂ | | | | 0 |
| MnO | | | | 0 |
| Fe₂O₃ | | | | 0,40 % |
| CaO | 75,67 % | 100 % | | 0,31 % |
| MgO | | | 68,96 % | 0,59 % |
| K₂O | | | | 1,12 % |
| Na₂O | | | | 0,21 % |
| SO₃ | | | | 0 |
| P₂O₅ | | | | 0,04 % |

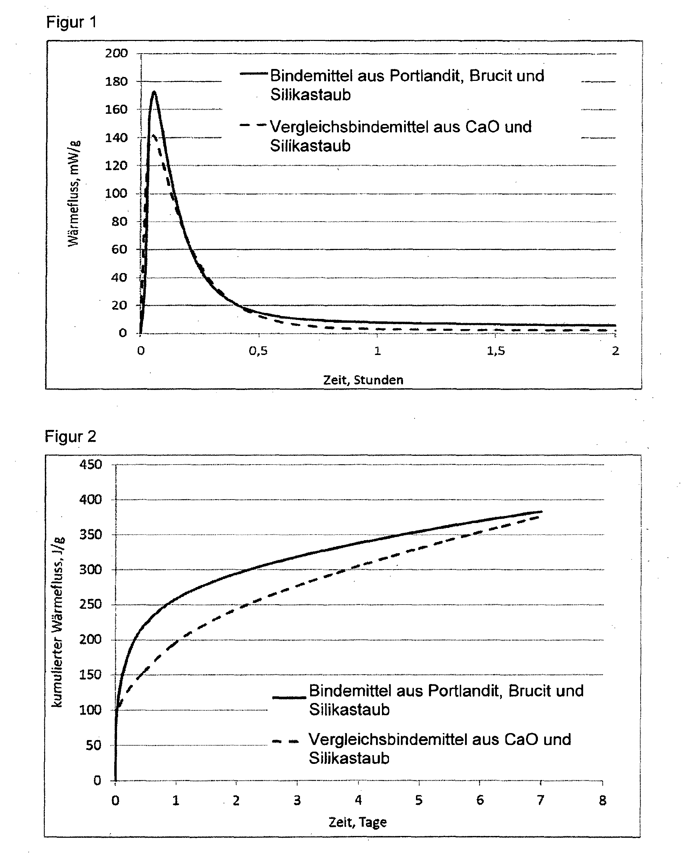

Die beiden Ausgangsmaterialmischungen wurden jeweils mit Wasser in einem Wasser/Feststoffverhältnis von 10 vermischt und 16 Stunden bei 185 °C im Autoklaven behandelt. Die Zwischenprodukte wurden 1 Stunde bei 500 °C getempert. Die erhaltenen Produkte wurden zur Prüfung der hydraulischen Reaktivität mit einem Wasser-Feststoffverhältnis von 0,5 in einem Kalorimeter zur Reaktion gebracht. Die erhaltenen Wärmeflüsse und kumulierten Wärmeflüsse sind in den Figuren 1 und 2 dargestellt. Man erkennt, dass das erfindungsgemäße Produkt mit dem Magnesiumgehalt mehr reaktive Bestandteile aufweist.

### Beispiel 2

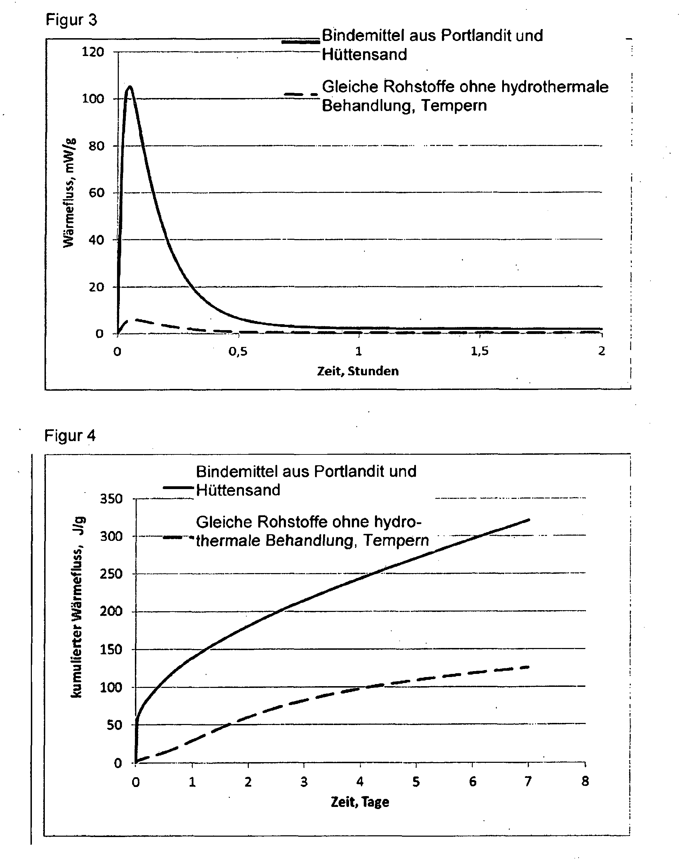

Aus den in Tabelle 2 aufgelisteten Rohstoffen wurde eine Ausgangsmaterialmischung mit 27,75 % Portlandit und 72,24 % Hüttensand hergestellt und entsprechend Beispiel 1 zu einem Bindemittel umgesetzt. Das Produkt wurde zur Prüfung der hydraulischen Reaktivität mit einem Wasser-Feststoffverhältnis von 0,5 in einem Kalorimeter zur Reaktion gebracht. Dieselben Materialien wurden außerdem zum Vergleich ohne die hydrothermale Behandlung und Temperung mit einem Wasser-Feststoffverhältnis von 0,5 in einem Kalorimeter zur Reaktion gebracht. Die gemessenen Wärmeflüsse bzw. kumulierten Wärmeflüsse sind in Figur 3 bzw. 4 dargestellt.

**Tabelle 2**

| Rohstoff | Portlandit | Hüttensand |
|---|---|---|
| Glühverlust 1050°C | 24,33 | 1,37% |
| SiO₂ | | 35,84% |
| Al₂O₃ | | 11,06% |
| TiO₂ | | 0,99% |
| MnO | | 0,34% |
| Fe₂O₃ | | 0,44% |
| CaO | 75,67% | 38,99% |
| MgO | | 8,19% |
| k₂O | | 0,49% |
| Na₂O | | 0,15% |
| SO₃ | | 3,18% |
| P₂O₅ | | 0,00% |
| Amorphe Phasen | | 92,6% |

Aus den Beispielen wird deutlich, dass das erfindungsgemäße Verfahren zu Produkten mit hoher Reaktivität führt, die als solche oder im Gemisch mit weiteren Substanzen als Bindemittel eingesetzt werden können. Im Vergleich zur Herstellung von Portlandzement wird der Energieeinsatz vermindert, teilweise sehr stark vermindert. Zudem können in weit größerem Umfang Nebenprodukte und Abfallstoffe eingesetzt werden.

## Patentansprüche

1. Verfahren zur Herstellung eines Bindemittels, umfassend die Schritte:
a) Bereitstellen eines Ausgangsmaterials aus einem oder mehreren Rohstoffen, die CaO, MgO, SiO₂, Al₂O₃ und Fe₂O₃ oder andere Verbindungen dieser Elemente enthalten und wobei das Ausgangsmaterial ein molares (Ca+Mg)/(Si+AI+Fe)-Verhältnis von 1,0 bis 3,5, ein molares Ca/Mg-Verhätinis von 0,1 bis 100 und ein molares AI/Si-Verhältnis von 100 bis 0,1 aufweist, bei dessen Ermittlung diejenigen Bestandteile unberücksichtigt bleiben, die sich bei einer hydrothermalen Behandlung im Autoklaven inert verhalten,
b) Mischen der Rohstoffe zu einer Ausgangsmaterialmischung,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis 0,1 bis 100 beträgt, und
d) Tempern des in Schritt c) erhaltenen Zwischenprodukts bei 350 bis 600 °C, wobei die Aufheizrate 10-6000 °C/min und die Verweilzeit 0,01-600 min betragen.

2. Verfahren gemäß Anspruch 1, **dadurch gekennzeichnet, dass** während des Mischens b) und/oder in den folgenden Schritten 0,1 bis 30 Gew.-% zusätzliche Elemente und/oder Oxide zugegeben werden.

3. Verfahren gemäß Anspruch 1 oder 2, **dadurch gekennzeichnet, dass** die Rohstoffe ausgewählt sind aus CaO, Ca(OH)₂, Ca- sowie Mg-(Hydroxid)Carbonate(Hydrate), MgO, Mg(OH)₂, Schlacken / Hüttensanden, Aschen, Portlandzement-Klinkern, Portlandzement, aufbereiteten Zementsteinen, CSAB, CAC, Glaspulver, Wasserglas und natürlichen Gesteinsmehlen (z.B. Basalt, Granit, etc.) in geeigneter Mischung.

4. Verfahren gemäß mindestens einem der Ansprüche 1 bis 3, **dadurch gekennzeichnet, dass** zwischen dem Mischen der Ausgangsstoffe b) und der hydrothermalen Behandlung c) ein zusätzlicher Brennprozess bei Temperaturen von 350 bis 1400 °, vorzugsweise von 750 bis 1100 °C, durchgeführt wird.

5. Verfahren gemäß mindestens einem der Ansprüche 1 bis 4, **dadurch gekennzeichnet, dass** zur Entwässerung in Schritt d) während des Aufheizens bei einer Temperatur von 350 - 600 °C eine Haltezeit von 1 - 120 min eingestellt wird.

6. Verfahren gemäß mindestens einem der Ansprüche 2 bis 5, **dadurch gekennzeichnet, dass** Natrium, Kalium, Bor, Schwefel, Chlor, Stickstoff, Kohlenstoff oder Phosphor oder Kombinationen davon als zusätzliche Elemente verwendet werden.

7. Verfahren gemäß mindestens einem der Ansprüche 2 bis 6, **dadurch gekennzeichnet, dass** Alkali- und/oder Erdalkali-Salze und/oder -Hydroxide als Quelle für die zusätzlichen Elemente und/oder Oxide verwendet werden.

8. Verfahren gemäß Anspruch 7, **dadurch gekennzeichnet, dass** die Alkali- und/oder Erdalkali-Salze und/oder Hydroxide aus der Gruppe bestehend aus CaSO₄·2H₂O, CaSO₄·½H₂O, CaSO₄, CaHPO₂·2H₂O, Ca₃P₂O₈, NaOH, KOH, Na₂CO₃, NaHCO₃, K₂CO₃, MgCO₃, MgSO₄ Na₂Al₂O₄, Na₃PO₄, K₃PO₄, Na₂[B₄O₅(OH)₄]·8H₂O, CaCl₂, Ca(NO₃)₂, MgCl₂, Mg(NO₃)₂, AlCl₃, Al(NO₃)₃, FeCl₃, Fe(NO₃)₃ Ca(CH₃COO)₂, Mg(CH₃COO)₂, Al(CH₃COO)₃, Ca(HCOO)₂, Mg(HCOO)₂, Al(HCOO)₃, oder deren Mischungen ausgewählt werden.

9. Verfahren gemäß einem der Ansprüche 1 bis 8, **dadurch gekennzeichnet, dass** vor der hydrothermalen Behandlung c) dem Gemisch von 0,01 bis 30 Gew.-% Impfkeime enthaltend Calciumsilikathydrate, Portlandklinker, Hüttensand, Magnesiumsilikate, Ccalciumsulfataluminat(belit)zement, Wasserglas und/oder Glaspulver zugegeben werden.

10. Bindemittel, erhältlich durch ein Verfahren gemäß mindestens einem der Ansprüche 1 bis 9.

11. Bindemittel gemäß Anspruch 10, **dadurch gekennzeichnet, dass** das Bindemittel mindestens ein Calciumsilikat, Calciumaluminat, Calciumaluminiumsilikat, Magnesium(calcium,aluminium,eisen)silikat oder Calciummagnesiumsilikat und mindestens eine röntgenamorphe Phase umfasst, wobei die Summe von Calciumsilikaten, Calciumaluminaten, Calciumaluminiumsilikaten, Magnesium(Calcium, Aluminium, Eisen)silikaten und Calciummagnesiumsilikaten mindestens 30 Gew.-% beträgt.

12. Bindemittel gemäß Anspruch 12, **dadurch gekennzeichnet, dass** das Bindemittel die folgenden Komponenten umfasst:
1 - 95 Gew.-% reaktive Calciumaluminate, vorzugsweise in Form von kristallinem C₁₂A₇, oder von wenig kristallinen oder amorphen Aluminatphasen
1 - 80 Gew.-% Magnesium(Calcium, Aluminium, Eisen)silikate, als kristalline, wenig kristalline oder amorphe Phasen, die Fremdionen wie Ca, Fe, Al enthalten können
1 - 80 Gew.-% C₂S Polymorphe, als kristalline, wenig kristalline oder amorphe Phasen
1 - 80 Gew.-% Calciumaluminatsilkate, als kristalline, wenig kristalline oder amorphe Phasen
1 - 80 Gew.-% Calciummagnesiumaluminatsilkate, als kristalline, wenig kristalline oder amorphe Phasen und bis zu 30 Gew.-% Spuren- und Nebenbestandteile, insbesondere C₅A₃, CA, Calciumoxid, γ-Aluminiumoxid und andere Aluminiumoxide, Quarz und/oder Kalkstein, CaO, Calciumsulfat, MgCO₃, Mg(OH)₂, FeO, Fe₂O₃, Fe₃O₄, Eisensilikate wie Fe₂SiO₄, amorphe Eisen-haltige Phasen und
0 - 30 Gew.-% Hydrate aus der hydrothermalen Behandlung.

13. Bindemittel gemäß einem der Ansprüche 10 bis 12, **dadurch gekennzeichnet, dass** die BET-Oberfläche des Bindemittels im Bereich von 1 bis 30 m²/g liegt.

14. Bindemittel gemäß einem der Ansprüche 10 bis 13, **dadurch gekennzeichnet, dass** der chemisch gebundene Wassergehalt maximal 20 Gew.-%, vorzugsweise weniger als 15 Gew.-%, besonders bevorzugt weniger als 10 Gew.-% beträgt.

15. Verwendung des Bindemittels gemäß einem der Ansprüche 10 bis 14 zur Herstellung von Baustoffen, insbesondere von Beton, Mörtel oder Putz.

## Claims

1. A method for producing a binder comprising the following steps:
a) providing a starting material from one or more raw materials that contain CaO, MgO, SiO₂, Al₂O₃ and Fe₂O₃ or other compounds of these elements, wherein the starting material has a molar (Ca+Mg)/(Si+Al+Fe) ratio from 1 to 3.5, a molar Ca/Mg ratio from 0.1 to 100, and a molar Al/Si ratio from 100 to 0.1, wherein constituents that are inert during the hydrothermal treatment in an autoclave are not taken into account for determination of the ratios,
b) mixing the raw materials to form a starting material mixture,
c) hydrothermal treating of the starting material mixture produced in step b) in an autoclave at a temperature from 100 to 300 °C and a residence time from 0.1 to 24 h, wherein the water/solids ratio is 0.1 to 100, and
d) tempering the intermediate product obtained in step c) at 350 to 600 °C, wherein the heating rate is 10-6000 °C/min and the residence time is 0.01-600 min.

2. The method according to Claim 1, **characterised in that** 0.1 to 30 % by weight additional elements and/or oxides are added during the mixing b) and/or in the following steps.

3. The method according to Claim 1 or 2, **characterised in that** the raw materials are selected from CaO, Ca(OH)₂, Ca and Mg (hydroxide)carbonate(hydrates), MgO, Mg(OH)₂, slags/granulated blast furnace slags, ashes, Portland cement clinkers, Portland cement, processed hardened cement pastes, CSAB, CAC, glass powder, sodium silicate and natural stone dusts (for example basalt, granite, etc.) in suitable mixture.

4. The method according to at least one of Claims 1 to 3, **characterised in that** an additional burning process at temperatures from 350 to 1400 °, preferably from 750 to 1100 °C, is performed between the mixing of the starting materials b) and the hydrothermal treatment c).

5. The method according to at least one of Claims 1 to 4, **characterised in that** a holding time of 1 - 120 min during heating at a temperature of 350 - 600 °C is performed for dewatering in step d).

6. The method according to at least one of Claims 2 to 5, **characterised in that** sodium, potassium, boron, sulphur, chlorine, nitrogen, carbon or phosphorous or combinations thereof are used as additional elements.

7. The method according to at least one of Claims 2 to 6, **characterised in that** alkaline and/or earth alkaline salts and/or hydroxides are used as a source for the additional elements and/or oxides.

8. The method according to Claim 7, **characterised in that** the alkaline and/or earth alkaline salts and/or hydroxides are selected from the group consisting of CaSO₄·2H₂O, CaSO₄·½ H₂O, CaSO₄, CaHPO₂·2H₂O, Ca₃P₂O₈, NaOH, KOH, Na₂CO₃, NaHCO₃, K₂CO₃, MgCO₃, MgSO₄, Na₂Al₂O₄, Na₃PO₄, K₃PO₄, Na₂[B₄O₅(OH)₄]·8H₂O, CaCl₂, Ca(NO₃)₂, MgCl₂, Mg(NO₃)₂, AlCl₃, Al(NO₃)₃, FeCl₃, Fe(NO₃)₃ Ca(CH₃COO)₂, Mg(CH₃COO)₂. Al(CH₃COO)₃, Ca(HCOO)₂, Mg(HCOO)₂, Al(HCOO)₃ or mixtures thereof.

9. The method according to at least one of Claims 1 to 8, **characterised in that**, before the hydrothermal treatment c), from 0.01 to 30 % by weight seeds containing calcium silicate hydrates, Portland clinker, granulated blast furnace slag, magnesium silicates, calcium sulphate aluminate (belite) cement, sodium silicate and/or glass powder are added to the mixture.

10. A binder obtainable by a method according to at least one of Claims 1 to 9.

11. The binder according to Claim 10, **characterised in that** the binder comprises at least one calcium silicate, calcium aluminate, calcium aluminium silicate, magnesium (calcium, aluminium, iron) silicate or calcium magnesium silicate and at least one X-ray amorphous phase, wherein the sum of calcium silicates, calcium aluminates, calcium aluminium silicates, magnesium (calcium, aluminium, iron) silicates and calcium magnesium silicates is at least 30 % by weight.

12. The binder according to Claim 12, **characterised in that** the binder comprises the following components:
1 - 95 % by weight reactive calcium aluminates, preferably in the form of crystalline C₁₂A₇, or ill crystalline or amorphous aluminate phases
1 - 80 % by weight magnesium (calcium, aluminium, iron) silicates, in the form of crystalline, ill crystalline or amorphous phases, which may contain foreign ions such as Ca, Fe and Al
1 - 80 % by weight C₂S polymorphs, in the form of crystalline, ill crystalline or amorphous phases
1 - 80 % by weight calcium aluminate silicates, in the form of crystalline, ill crystalline or amorphous phases
1 - 80 % by weight calcium magnesium aluminate silicates, in the form of crystalline, ill crystalline or amorphous phases
and up to 30 % by weight traces and minor components, in particular C₅A₃, CA, calcium oxide, γ alumina and other aluminas, quartz and/or limestone, CaO, calcium sulphate, MgCO₃, Mg(OH)₂, FeO, Fe₂O₃, Fe₃O₄, iron silicates such as Fe₂SiO₄, amorphous iron-containing phases and
0 - 30 % by weight hydrates from the hydrothermal treatment.

13. The binder according to one of Claims 10 to 12, **characterised in that** the BET surface of the binder ranges from 1 to 30 m²/g.

14. The binder according to at least one of Claims 10 to 13, **characterised in that** the chemically bonded water content is at most 20 % by weight, preferably less than 15 % by weight, particularly preferably less than 10 % by weight.

15. Use of the binder according to one of Claims 10 to 14 for producing building materials, in particular concrete, mortar or plaster.

## Revendications

1. Procédé pour la préparation d'un liant, comprenant les étapes de
a) mise à disposition d'un matériau de départ constitué par une ou plusieurs matières premières qui contiennent du CaO, du MgO, du SiO₂, de l'Al₂O₃ et du Fe₂O₃ ou d'autres composés de ces éléments et le matériau de départ présentant un rapport molaire (Ca + Mg)/(Si + Al + Fe) de 1,0 à 3,5, un rapport molaire Ca/Mg de 0,1 à 100 et un rapport molaire Al/Si de 100 à 0,1, les constituants qui se comportent de manière inerte lors d'un traitement hydrothermique dans une autoclave n'étant pas pris en considération lors de la détermination de ces rapports,
b) mélange des matières premières en un mélange de matériau de départ,
c) traitement hydrothermique du mélange de matériau de départ préparé dans l'étape b) dans l'autoclave à une température de 100 à 300°C et un temps de séjour de 0,1 à 24 heures, le rapport eau/solide valant 0,1 à 100, et
d) traitement thermique du produit intermédiaire obtenu dans l'étape c) à 350 jusqu'à 600°C, la vitesse de chauffage étant de 10-6000°C/min et le temps de séjour étant de 0,01-600 min.

2. Procédé selon la revendication 1, **caractérisé en ce que** 0,1 à 30% en poids d'éléments et/ou d'oxydes supplémentaires sont ajoutés pendant le mélange b) et/ou dans les étapes suivantes.

3. Procédé selon la revendication 1 ou 2, **caractérisé en ce que** les matières premières sont choisies parmi CaO, Ca(OH)₂, les (hydrates de) (hydroxyde)carbonates de Ca ainsi que de Mg, MgO, Mg(OH)₂, les scories/les sables laitiers, les cendres, les clinkers de ciment Portland, le ciment Portland, la pâte de ciment durcie préparée, le CSAB, le CAC, la poudre de verre, le verre soluble et les farines de pierres naturelles (par exemple basalte, granite, etc.) en mélange approprié.

4. Procédé selon au moins l'une quelconque des revendications 1 à 3, **caractérisé en ce qu'**on réalise, entre le mélange des substances de départ b) et le traitement hydrothermique c), un procédé de calcination supplémentaire à des températures de 350 à 1400°C, de préférence de 750 à 1100°C.

5. Procédé selon au moins l'une quelconque des revendications 1 à 4, **caractérisé en ce qu'**on règle un temps de maintien de 1-120 minutes pour la déshydratation dans l'étape d) pendant le chauffage à une température de 350-600°C.

6. Procédé selon au moins l'une quelconque des revendications 2 à 5, **caractérisé en ce qu'**on utilise du sodium, du potassium, du bore, du soufre, du chlore, de l'azote, du carbone ou du phosphore ou des combinaisons de ceux-ci comme éléments supplémentaires.

7. Procédé selon au moins l'une quelconque des revendications 2 à 6, **caractérisé en ce qu'**on utilise des sels et/ou des hydroxydes de métal alcalin et/ou de métal alcalino-terreux comme source pour les éléments et/ou les oxydes supplémentaires.

8. Procédé selon la revendication 7, **caractérisé en ce que** les sels et/ou les hydroxydes de métal alcalin et/ou de métal alcalino-terreux sont choisis dans le groupe constitué par CaSO₄·2H₂O, CaSO₄·1/2H₂O, CaSO₄, CaHPO₂·2H₂O, Ca₃P₂O₈, NaOH, KOH, Na₂CO₃, NaHCO₃, K₂CO₃, MgCO₃, MgSO₄, Na₂Al₂O₄, Na₃PO₄, K₃PO₄, Na₂[B₄O₅(OH)₄]·8H₂O, CaCl₂, Ca(NO₃)₂, MgCl₂, Mg(NO₃)₂, AlCl₃, Al(NO₃)₃, FeCl₃, Fe(NO₃)₃ Ca(CH₃COO)₂, Mg(CH₃COO)₂, Al(CH₃COO)₃, Ca(HCOO)₂, Mg(HCOO)₂, Al(HCOO)₃ ou leurs mélanges.

9. Procédé selon l'une quelconque des revendications 1 à 8, **caractérisé en ce qu'**on ajoute au mélange, avant le traitement hydrothermique c), 0,01 à 30% en poids de germes d'ensemencement contenant des hydrates de silicate de calcium, du clinker de Portland, du sable laitier, des silicates de magnésium, du ciment de sulfate-aluminate de calcium (bélite), du verre soluble et/ou de la poudre de verre.

10. Liant pouvant être obtenu par un procédé selon au moins l'une quelconque des revendications 1 à 9.

11. Liant selon la revendication 10, **caractérisé en ce que** le liant comprend au moins un silicate de calcium, un aluminate de calcium, un aluminosilicate de calcium, un silicate de magnésium(calcium, aluminium, fer) ou un silicate de calcium et de magnésium et au moins une phase amorphe aux rayons X, la somme des silicates de calcium, des aluminates de calcium, des aluminosilicates de calcium, des silicates de magnésium(calcium, aluminium, fer) et des silicates de calcium et de magnésium valant au moins 30% en poids.

12. Liant selon la revendication 12, **caractérisé en ce que** le liant contient les composants suivants :
1-95% en poids d'aluminates de calcium réactifs, de préférence sous forme de C₁₂A₇ cristallin ou de phases d'aluminate peu cristallines ou amorphes
1-80% en poids de silicates de magnésium(calcium, aluminium, fer), sous forme de phases cristallines, peu cristallines ou amorphes, qui peuvent contenir des ions étrangers tels que Ca, Fe, Al
1-80% en poids de C₂S polymorphe, sous forme de phases cristallines, peu cristallines ou amorphes
1-80% en poids d'aluminosilicates de calcium, sous forme de phases cristallines, peu cristallines ou amorphes
1-80% en poids d'aluminosilicates de calcium et de magnésium, sous forme de phases cristallines, peu cristallines ou amorphes
et jusqu'à 30% en poids de constituants à l'état de traces et secondaires, en particulier C₅A₃, CA, oxyde de calcium, γ-oxyde d'aluminium et d'autres oxydes d'aluminium, quartz et/ou pierre calcaire, CaO, sulfate de calcium, MgCO₃, Mg(OH)₂, FeO, Fe₂O₃, Fe₃O₄, silicates de fer, tels que Fe₂SiO₄, des phases amorphes contenant du fer et
0-30% en poids d'hydrates provenant du traitement hydrothermique.

13. Liant selon l'une quelconque des revendications 10 à 12, **caractérisé en ce que** la surface spécifique BET du liant se situe dans la plage de 1 à 30 m²/g.

14. Liant selon l'une quelconque des revendications 10 à 13, **caractérisé en ce que** la teneur en eau chimiquement liée est d'au maximum 20% en poids, de préférence inférieure à 15% en poids, de manière particulièrement préférée inférieure à 10% en poids.

15. Utilisation du liant selon l'une quelconque des revendications 10 à 14 pour la fabrication de matériaux de construction, en particulier de béton, de mortier ou d'enduit.
